Europäisches Patentamt

European Patent Office

Office européen des brevets

(19)

(11) Publication number: **0 156 555**
A1

# (12) EUROPEAN PATENT APPLICATION

(21) Application number: 85301546.9

(22) Date of filing: 06.03.85

(51) Int. Cl.⁴: **G 11 B 20/10**
G 11 B 7/00
//G11B27/36, G11B20/18

(30) Priority: 07.03.84 JP 43387/84

(43) Date of publication of application:
02.10.85 Bulletin 85/40

(84) Designated Contracting States:
DE FR

(71) Applicant: Kabushiki Kaisha Toshiba
72, Horikawa-cho Saiwai-ku
Kawasaki-shi Kanagawa-ken 210(JP)

(72) Inventor: Nago, Chiaki c/o Patent Division
Toshiba Corporation Principal Office
1-1 Shibaura 1-chome Minato-ku Tokyo(JP)

(74) Representative: Shindler, Nigel et al,
BATCHELLOR, KIRK & EYLES 2 Pear Tree Court
Farringdon Road
London EC1R 0DS(GB)

(54) Optical reproducing apparatus & method.

(57) Optical reproducing apparatus in which the reflected beam from a recording member is converted to electrical signals and the electrical signals are differentiated before they are binary-coded. Then the binary-coded signals are shaped to form reproduced pulse signals corresponding to the recorded data.

FIG. 6.

EP 0 156 555 A1

"Optical Reproducing Apparatus & Method"

This invention relates to optical reproducing devices such as, for example, optical disc units with which information is optically recorded or reproduced. The invention includes both devices for and methods of information reproducing.

An optical disc unit records or reproduces information optically by irradiating a laser beam onto an optical disc. Recently, the optical disc unit is finding many useful applications such as in large capacity information filing systems.

In such an optical disc unit, grooved tracks, called "pregrooves", are formed spirally or concentrically on the optical disc as a guide. A single laser beam is used as a recording beam or as a reproducing beam. Since the recording beam has a higher energy than the reproducing beam, data pits are formed during recording having a different size and different interval than the pregrooves. Reproduction of the data is based on a difference in the quantity of reflections between the data pits and the pregrooves when irradiated by the reproducing beam. During reproduction, the electrical signals corresponding to the quantity of reflections are binary-coded and shaped to a fixed slice-level so as to obtain pulse signals that match the diameter of the data pits. To obtain an exact pulse signal, the data pulses should be binary-coded at their centre of amplitude, but this is difficult owing to amplitude variations. As a result, accurate binary-coding of the data pulses may not occur, resulting in reading errors.

The present invention provides an optical reproducing apparatus and method that overcomes these problems. In the present invention, the electrical signals corresponding to the reflected light are differentiated before they are binary-coded. Preferably, the electrical signals corresponding to the reflections from the recording pits formed on the recording member are differentiated, the differentiated signals are then binary-coded and the binary-coded signals are shaped.

Some embodiments of the invention will now be described by way of example with reference to the accompanying drawings, wherein:

Figure 1 shows a sectional view of an optical disc for explaining the present invention;

Figures 2 to 4 shows the configuration of the optical head according to one embodiment of the present invention;

Figure 5 shows the relation between the spot beam of the recording beam and the spot beam of the reproducing beam;

Figure 6 is a block diagram of an electrical circuit according to the present invention;

Figure 7 shows the signal waveforms in the circuit of Figure 6; and

Figure 8 shows the configuration of the optical head in another embodiment.

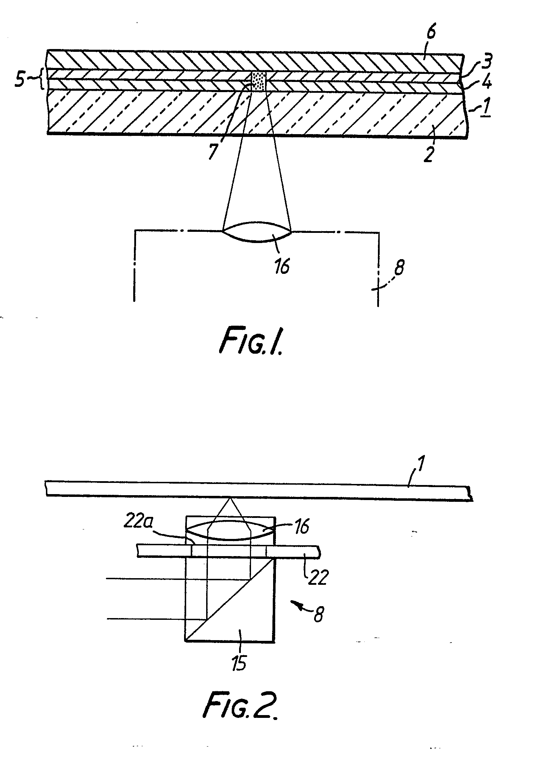

In Figure 1, optical disc 1 has an optical recording medium and has pregroove tracks formed spirally on the surface thereof. Optical disc 1 is rotated by a motor (not shown in the drawing). Disc 1 is made up of a laminate consisting of recording layer 5 which comprises two thin films 3 and 4 having different optical absorptivities, also known as optical extinction coefficients. Films 3 and 4 are placed between a transparent substrate 2 formed of acrylic resin or glass and aluminium plate 6 acting as a reflector. Thin film 3 is formed from germanium which has a small optical extinction coefficient while film 4 is formed from aluminium having a larger optical extinction coefficient. Thin film 3 is translucent. At the spot where the recording laser beam is directed, thin films 3 and 4 are mutually diffused to extinguish the boundary between them and then form new transparent thin film 7, that is recording pit 7, having a different optical extinction coefficient.

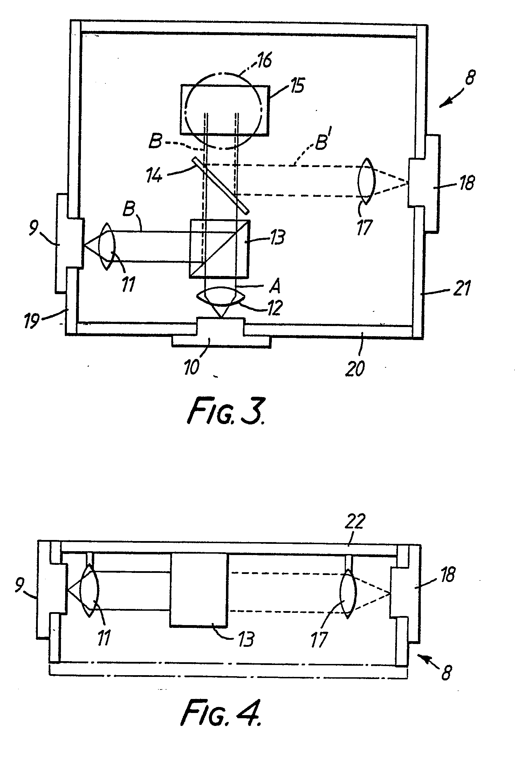

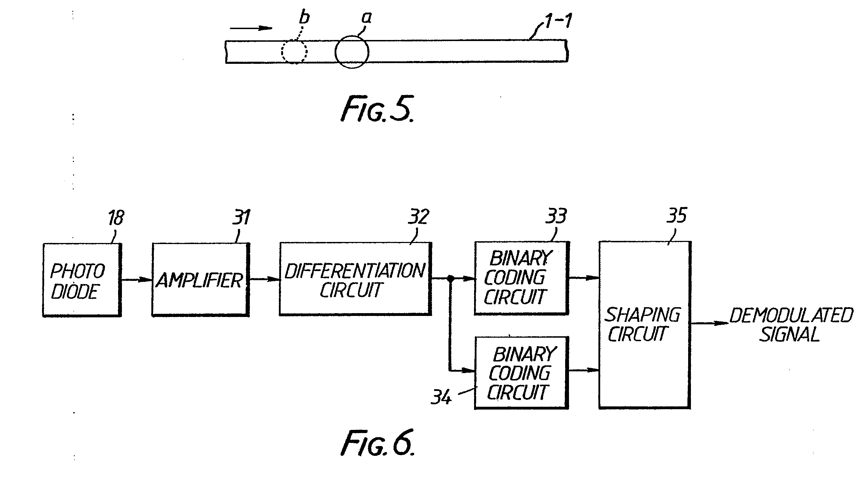

An optical head 8 for recording and reproducing is linearly moved in the radial direction of optical disc 1 by a linear motor mechanism (not shown in the drawing). Optical head 8, as shown in Figures 2 to 4, consists of semiconductor laser oscillator 9 as the second light source which produces a laser beam having a wavelength 0.78 µm for reproducing, semiconductor laser oscillator 10 as the first light source which produces a laser beam having a wavelength of 0.83 µm for recording, collimator lenses 11 and 12, deflection beam splitter 13, half mirror 14, total reflection mirror 15, objective lens 16, condenser lens 17 and photodiode 18 which converts reflection from optical disc 1 into electricity. Semiconductor laser oscillators 9 and 10 are mounted by screws (not shown in the drawing) to side plates 19 and 20. Collimator lenses 11 and 12, deflection beam splitter 13, half mirror 14, total reflection mirror 15 and condenser lens 17 are all fixed to top plate 22. Bottom board 23 is mounted beneath side plates 19, 20 and 21 by screws (not shown in the drawing).

Laser beam A for recording data fed from semiconductor laser oscillator 10 is collimated by lens 12, and guided to total reflection mirror 15 via beam splitter 13 and half mirror 14. The beam, reflected by total reflection mirror 15, is then directed to objective lens 16 which converges the beam to a 0.83 µm diameter spot before being irradiated onto optical disc 1. Laser beam B, for reproducing data, originates from semiconductor laser oscillator 9, is collimated by lens 11, and guided to total reflection mirror 15 via beam splitter 13 and half mirror 14. The beam, reflected by total reflection mirror 15, is then directed to objective lens 16 which converges the beam to a 0.78 µm diameter spot before being directed onto optical disc 1. The beam B is reflected from the optical disc to produce reflected beam B'. Reflection B' is guided to half mirror 14 via objective lens 16 and total reflection mirror 15, where reflection B' is again reflected and sent to condenser lens 17. The resulting condensed beam is formed into an electrical signal.

Two light fluxes, recording beam A and reproducing beam B, pass through objective lens 16. As shown in Figure 5, the 0.83 µm diameter spot a from recording beam A passes through objective lens 16 along the data recording direction shown by an arrow in Figure 5 on track 1-1 of optical disc 1, while the 0.78 μm diameter spot beam b from reproducing beam B follows behind beam a, relative to the movement of the disc.

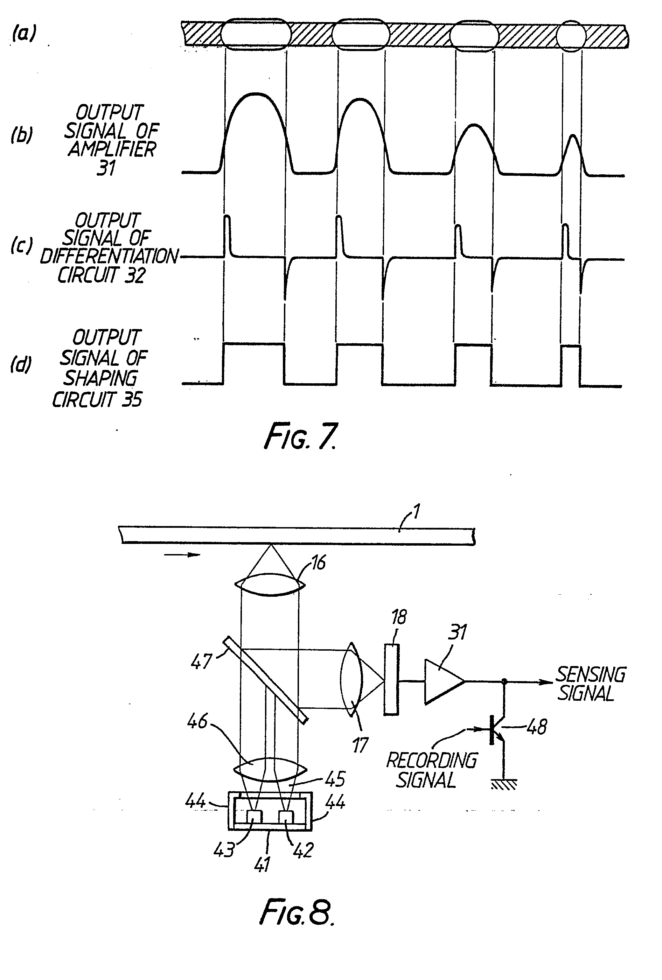

Figure 6 shows a block diagram of an electrical circuit for processing signals from photodiode 18. In Figure 6, the output signal from photodiode 18 is amplified by amplifier 31 as shown in Figure 7b, and the output signal from amplifier 31 is differentiated by differentiating circuit 32 as shown in Figure 7c. Circuit 33 is a circuit which binary-codes the positive part of the differential output of circuit 32, and circuit 34 is a binary coding circuit which binary-codes the negative part of the differential output. Shaping circuit 35 shapes the binary-coded signals from circuit 33 and 34 to obtain a shaped signal as shown in Figure 7d. As an example, binary coding circuits 33 and 34 may include comparators and shaping circuit 35 may include a JK flip-flop. Circuit 33 would produce a pulse while the differentiated signal exceeds a positive reference value and circuit 34 would produce a pulse while the differentiated signal is less than a negative reference value.

Figure 7a shows the "land/pit" technique by which data is recorded on tracks of optical disc 1 with the recording interval changed and with the size of each pit changed. The term "land" refers to the recording interval between pits.

The operation of the optical disc unit is as follows.

In the recording mode, optical head 8 is suitably positioned with respect to optical disc 1, and reproducing beam B is produced by semiconductor laser oscillator 9. Beam B is collimated by collimator lens 11 and guided to deflection beam splitter 13. Reproducing beam B is then reflected by deflection beam splitter 13 to pass through half-silvered mirror 14. It is then reflected by total reflection mirror 15 and guided to objective lens 16. Objective lens 16 converges reproducing beam B and directs a 0.78 μm diameter spot on optical disc 1. Under the above condition, a drive signal matching the data to be recorded activates semiconductor laser oscillator 10 to produce recording beam A. Beam A is collimated by lens 12, passes through deflection beam splitter 13 and half-silvered mirror 14, is reflected by total reflection mirror 15 and is guided to objective lens 16. Objective lens 16 converges recording beam A and directs a 0.83 μm diameter spot on optical disc 1. In this case, spot a of recording beam A is positioned forward along the data recording direction on track 1-1 of optical disc 1, while spot b of reproducing beam B is positioned just behind spot a. That is, spot a is directed onto recording layer 5 of optical disc 1 so that the affected portions of thin films 3 and 4 are mutually diffused to extinguish the boundary thereof and new thin transparent film 7, that is a recording pit 7, is formed.

Immediately after recording pit 7 has been formed, spot b of reproducing beam B is directed onto that portion. Since the diameter of spot b (0.78 μm) is smaller than that of the recording pit 7 (0.83 μm), spot b passes accurately onto recording pit 7 and is reflected on reflector 6. The resulting reflected beam is converted to parallel flux B' by objective lens 16, reflected by total reflection mirror 15 and guided to half-silvered mirror 14. Beam B' is reflected by half-silvered mirror 14 and is guided through condenser lens 17 to photodiode 18. A corresponding image is formed on photodiode 18 which then delivers an electrical signal matching that image to amplifier 31. Amplifier 31 amplifies the signal and delivers it to differentiation circuit 32. Circuit 32 differentiates the supplied signal, and produces a positive differential pulse when the sensing signals of photodiode 18 rises and a negative differential pulse when the sensing signal of photodiode 18 falls. The positive differential pulse is binary-coded by circuit 33, while the negative pulse is binary-coded by circuit 34. Binary-code signals from binary-coding circuits 33 and 34 are shaped by circuit 35 to produce a correct demodulation signal that matches the diameter of recording pit 7. This demodulation signal, generated immediately after recording, allows checking whether or not the data has been correctly recorded. That is, the demodulation signal derived from the recently recorded disc may be compared with the data signal which was employed to control recording on the disc.

This checking can be performed immediately after the data has been recorded, which provides an advantage over the conventional checking operation having a certain time gap resulting from checking after additional data has been recorded.

In the reproducing mode, only reproducing beam B from semiconductor laser oscillator 9 is generated. The demodulation signal derived from shaping circuit 35 as stated above is used as a reproducing signal related to data stored with data pits 7. Thus, reproducing data which is the same as the recording data can be exactly obtained.

In the above embodiment, there are two separate semiconductor laser oscillators. However, they may be located together on the same substrate. More specifically, as shown in Figure 8, semiconductor laser oscillator 42, which generates a recording beam, and semiconductor laser oscillator 43, which generates a reproducing beam, are disposed together on substrate 41. Side plates 44 and glass top plate 45 are mounted on substrate 41, and semiconductor laser oscillators 42 and 43 can be mounted in an enclosure comprising substrate 41, side plate 44 and top plate 45. Laser beams generated by semiconductor laser oscillators 42 and 43 are guided to objective lens 16 via collimator lens 46 and half-silvered mirror 47. Objective lens 16 irradiates one area with the recording beam forward along the data recording direction on optical disc 1, and another area with the reproducing beam just behind the recording spot. Reflections of the beam on optical disc 1 are guided to condenser lens 17 via objective lens 16 and half-silvered mirror 47, wherein the beam is formed into an image on photodiode 18. In this case, the reflections of the recording beam and the reproducing beam have been introduced to photodiode 18. For this reason, the output of photodiode 18 is amplified by circuit 31 and the amplified signal is masked and delivered by causing switching device 48 to be switched by a recording signal that drives semiconductor laser oscillator 42. Thus only the signal that has been sensed by the reflection of the reproduction beam is produced by photodiode 18.

The means of generating recording/reproducing beams is not limited to a semiconductor laser oscillator but may be a helium or neon laser oscillator. The wavelengths of the recording beam and the reproducing beam are not limited to 0.83 µm and 0.78 µm, respectively, but may be any other wavelengths as long as they satisfy the condition that the wavelength of the recording beam is greater than that of the reproducing beam.

Furthermore, the materials of the two thin films forming the recording layer are not limited to germanium and aluminium, respectively, but may be at least two different materials whose optical extinction coefficient ratio is 1.5 or greater and which have a large mutual diffusion coefficient at high temperature. That is, film 3 may be made from materials having small optical extinction coefficients such materials whose main constituent is germanium, titanium, thallium and alloys containing these materials. Film 4 may be made from materials having large optical extinction coefficients such as materials whose main constituent is tellurium, bismuth, tin, gold, silver, antimony, aluminium and alloys containing these materials.

Furthermore, the recording pits may be formed by other processes, for example, melting, vaporisation, bubbling etc.

Although only several preferred embodiments have been described in detail above, those skilled in the art will readily appreciate that many modifications are possible in the preferred embodiments with materially departing from the novel techniques and advantages of this invention. Accordingly, all such modifications are intended to be covered by this invention within the scope of the following claims.

CLAIMS

1.      Apparatus for optically reading data recorded on a recording member comprising a beam source (9) for directing a reproducing beam onto said recording member, and
      reproducing means (18) for generating electrical signals corresponding to an output beam resulting from modification of said reproducing beam by interaction with said recording member; characterised by:
      differentiation means (32) for differentiating said electrical signals generated by said reproducing means; and
      shaping means (35) for shaping said differential signals from said differentiation means and generating demodulated signals corresponding to said recorded data.

2.      Apparatus according to claim 1, wherein said recording member reflects said reproducing beam and said output beam is the reflection of said reproducing beam from said recording member.

3.      Apparatus according to claim 2, wherein said reproducing means includes: a photodector (18) for detecting said output beam from said recording member, and an amplifier circuit (31) connected to the output of said photodector.

4.      A method of optically reproducing data recorded on a recording member, said method comprising the steps of:
      directing a reproducing beam onto said recording member;
      converting an output beam resulting from alteration of said reproducing beam by said recording member to electrical signals;
      differentiating said electrical signals;
      binary-coding said differentiated signals; and
      shaping said binary-code signals to generate demodulation signals corresponding to said recorded data.

5. A method according to claim 4 wherein said recording member reflects said reproducing beam and said output beam is the reflection of said reproducing beam from said recording member.

6. A method according to claim 5, wherein said recording member is an optical disc.

7. A method according to claim 4, wherein said converting step includes the steps of:

generating electrical signals corresponding to the reflectance; and

amplifying said electrical signals for said differentiating step.

8. A method according to claim 4, wherein said differentiating step produces a signal having positive and negative going portions, said coding step includes the steps of producing first pulses related to said positive portions and second pulses related to said negative portions and said shaping means employs said first and second pulses to generate said demodulated signals.

**FIG.1.**

**FIG.2.**

0156555

2/4

0156555

FIG. 3.

FIG. 4.

b a 1-1

→

*FIG.5.*

| 18 | 31 | 32 | 33 | 35 |

```
PHOTO      →  AMPLIFIER  →  DIFFERENTIATION  →  BINARY      →  SHAPING   →  DEMODULATED
DIODE                        CIRCUIT             CODING          CIRCUIT      SIGNAL
                                                 CIRCUIT
```

BINARY
CODING
CIRCUIT

34

*FIG.6.*

0156555

(a)

(b) OUTPUT SIGNAL OF AMPLIFIER 31

(c) OUTPUT SIGNAL OF DIFFERENTIATION CIRCUIT 32

(d) OUTPUT SIGNAL OF SHAPING CIRCUIT 35

FIG. 7.

FIG. 8.

0156555

European Patent
Office

EUROPEAN SEARCH REPORT

. Application number

EP 85 30 1546

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | EP-A-0 049 136 (TOKYO SHIBAURA DENKI K.K.) <br> * Page 3, line 32 - page 4, line 31; page 8, lines 9-29; figures 1,2 * | 1-8 | G 11 B 20/10 <br> G 11 B 7/00 // <br> G 11 B 27/36 <br> G 11 B 20/18 |
| Y | PATENTS ABSTRACTS OF JAPAN, vol. 7, no. 51(P-179)(1196), 26th February 1983; & JP - A - 57 198 546 (FUJI XEROX K.K.) 06-12-1982 * Abstract; figure: h-k * | 1,2,4-6 | |
| A | IDEM. | 3,7,8 | |
| Y | PATENTS ABSTRACTS OF JAPAN, vol. 7, no. 168(P-212)(1313), 23rd July 1983; & JP - A - 58 73021 (HITACHI SEISAKUSHO K.K.) 02-05-1983 * Abstract * | 3,7 | |
| A | IDEM. | 1,2,4-6,8 | TECHNICAL FIELDS SEARCHED (Int. Cl.4) <br><br> G 11 B |
| Y | US-A-3 174 141 (SULLIVAN et al.) * Figure 6 * | 8 | |
| P,X | US-A-4 475 183 (D.MARCHANT et al.) * The whole document * | 1-7 | |
| | -/- | | |

The present search report has been drawn up for all claims

| Place of search | Date of completion of the search | Examiner |
|---|---|---|
| THE HAGUE | 05-06-1985 | DAALMANS F.J. |

0156555

European Patent
Office

EUROPEAN SEARCH REPORT

. Application number

EP 85 30 1546

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 051 343 (NORTH AMERICAN PHILIPS CORP.) * The whole document * | 1-8 | |
| A | PATENTS ABSTRACTS OF JAPAN, vol. 8, no. 10(P-248)(1447), 18th January 1984; & JP - A - 58 171 727 (FUJITSU K.K.) 08-10-1983 * Abstract * | 1-8 | |
| A | EP-A-0 077 075 (HITACHI, LTD.) * Page 7, line 9 - page 10, line 28; page 13, lines 14-25; page 19, lines 13-16 * | 1-8 | |

TECHNICAL FIELDS
SEARCHED (Int. Cl.4)

The present search report has been drawn up for all claims

| Place of search | Date of completion of the search | Examiner |
|---|---|---|
| THE HAGUE | 05-06-1985 | DAALMANS F.J. |